Europäisches Patentamt

European Patent Office

Office européen des brevets

(19)

(11) Veröffentlichungsnummer: **0 176 892**
**B1**

(12) EUROPÄISCHE PATENTSCHRIFT

(45) Veröffentlichungstag der Patentschrift:
26.10.88

(21) Anmeldenummer: 85111944.6

(22) Anmeldetag: 20.09.85

(51) Int. Cl.⁴: **B 23 K 11/30**, B 23 K 11/32

(54) Vorrichtung zum Punktschweissen beschichteter Blechteile.

(30) Priorität: 25.09.84 CH 4583/84

(43) Veröffentlichungstag der Anmeldung:
09.04.86 Patentblatt 86/15

(45) Bekanntmachung des Hinweises auf die Patenterteilung:
26.10.88 Patentblatt 88/43

(84) Benannte Vertragsstaaten:
CH DE FR GB IT LI NL SE

(56) Entgegenhaltungen:
EP - A - 0 038 646
DE - C - 1 017 042
US - A - 3 015 713
US - A - 4 352 001

PATENT ABSTRACTS OF JAPAN, Band 6, Nr. 242
(M-175)[1120], 30. November 1982; & JP - A - 57 139 477
(FURUKAWA DENCHI K.K.) 28.08.1982
idem

(73) Patentinhaber: ELPATRONIC AG, Baarerstrasse 117,
CH-6300 Zug (CH)

(72) Erfinder: Opprecht, Paul, Herrenbergstrasse 10,
CH-8962 Bergdietikon (CH)

(74) Vertreter: Hotz, Klaus, Dipl.-El.-Ing. / ETH, c/o
SOUDRONIC AG Industriestrasse 35 Postfach 11,
CH-8962 Bergdietikon (CH)

## Beschreibung

Die Erfindung betrifft eine Vorrichtung zum Punktschweissen beschichteter Blechteile, insbesondere zum Anschweissen von Laschen an aufreissbare Dosenteile aus Weissblech, mit einem Paar Schweisselektroden, die taktweise zueinander hin und voneinander weg bewegbar sind.

Das elektrische Widerstandsschweissen beschichteter Blechteile, insbesondere aus Weissblech, bereitet häufig Schwierigkeiten, da die Beschichtung dazu neigt, die Schweisselektroden zu verschmutzen und dadurch den Stromübergangswiderstand von diesen auf die Blechteile zu erhöhen mit der Folge, dass Funken und Spritzer entstehen können und die Festigkeit der Schweissung vermindert wird.

Beim kontinuierlichen Längsnahtschweissen von Dosenkörpern ist es bekannt (DE-C-1 017 042; EP-A-38 646) zwischen zwei einander überlappenden Randbereichen zylindrisch gerollter Blechzuschnitte und je einem rollenförmigen Elektrodenträger einen Elektrodendraht hindurchzuführen, auf dem sich die Elektrodenträger stetig abwälzen.

Das Punktschweissen beschichteter Blechteile, insbesondere das Anschweissen von Laschen an aufreissbaren Dosenteilen aus Weissblech ist aus der den Oberbegriff des Patentanspruches 1 bildenden US-PS 3 015 713 bekannt.

Dort wirkt die Schweisskraft (siehe Fig. 3) im rechten Winkel zur Drehachse der drehbaren Elektrode 66 (US-PS 3 015 713, Kolonne 4, 3. Absatz). Dabei hat sich als Nachteil erwiesen, dass die Lagerungen der drehbaren Elektrode stets an der gleichen Stelle stark belastet werden.

Der Erfindung liegt deshalb die Aufgabe zugrunde, eine Vorrichtung der eingangs beschriebenen Gattung derart zu gestalten, dass sie eine grosse Anzahl Punktschweissungen in kurzer Zeit störungsfrei auszuführen vermag.

Die Aufgabe ist erfindungsgemäss dadurch gelöst, dass mindestens eine der Schweisselektroden, die eine im wesentlichen ebene, ringförmige Stirnfläche zum Schweissen hat, schrittweise um eine Achse drehbar ist, längs derer die beiden Schweisselektroden zueinander hin- und voneinander wegbewegbar sind.

Die vorliegende Ausführungsform ist vorzugsweise dadurch weitergebildet, dass die bzw. jede drehbare Schweisselektrode taktweise um einen Winkel drehbar ist, durch den eine volle Umdrehung (360°) nicht ohne Rest teilbar ist. Damit wird erreicht, dass die Schweisselektroden sich an ihren ringförmigen Stirnflächen gleichmässig abnutzen und eine dementsprechend lange Lebensdauer haben.

Ausführungsbeispiele der Erfindung werden im folgenden anhand schematischer Zeichnungen mit weiteren Einzelheiten erläutert. Es zeigt:

Fig. 1 eine Schweissvorrichtung mit Merkmalen der Erfindung und

Fig. 2 den Teilschnitt II–II in Fig. 1

Die dargestellte Schweissvorrichtung hat die Aufgabe, an Dosenteile 10, insbesondere ebene Zuschnitte aus Weissblech von beispielsweise 0,2 mm Dicke, je eine Lasche 12 anzuschweissen, die beispielsweise aus Weissblech von 0,4 mm Dicke besteht und zum Aufreissen der aus einem solchen Dosenteil gebildeten Dose vorgesehen ist. Im Ausführungsbeispiel ist dem Dosenteil 10 ein unterer Elektrodenträger 14 und der Lasche 12 ein stösselartiger oberer Elektrodenträger 16 zugeordnet, und es ist ein Schweisstransformator 18 vorgesehen, an dessen Sekundärkreis eine untere Schweisselektrode 20 sowie eine obere Schweisselektrode 22 mittelbar oder unmittelbar angeschlossen ist.

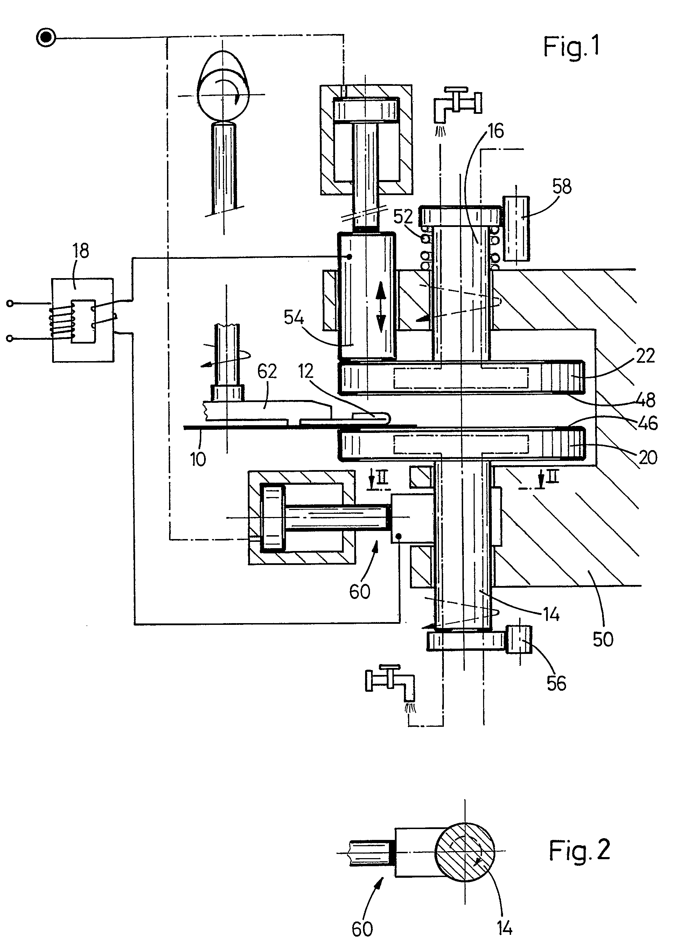

Bei der in Fig. 1 und 2 dargestellten Vorrichtung ist ein axial unverschiebbarer unterer Elektrodenträger 14 senkrecht unter einem auf- und abbewegbaren oberen Elektrodenträger 16 angeordnet. Für den Schweissstrom, der beispielsweise die Grössenordnung von 4000A hat, sorgt ein Schweisstransformator 18. An den beiden Elektrodenträgern 14 und 16 ist je eine scheibenförmige Schweisselektrode 20 bzw. 22 befestigt, die eine ringförmige Stirnfläche 46 bzw. 48 aufweist. Die beiden Elektrodenträger 14 und 16 sowie scheibenförmigen Schweisselektroden 20 und 22 haben eine gemeinsame senkrechte Achse A und sind in einem Rahmen 50 derart gelagert, dass sie um diese Achse drehbar sind.

Der obere Elektrodenträger 16 ist durch eine Druckfeder 52 mit einer Kraft in der Grössenordnung von etwa 40 kp nach oben hin vorgespannt, und ist gegen die Kraft dieser Feder mittels eines hydraulisch betätigbaren Stössels 54 nach unten drückbar. Beiden Elektrodenträgern 14 und 16 ist je ein Antrieb 46 bzw. 48 für schrittweise stattfindende Drehbewegungen in der Grössenordnung von etwa 1° zugeordnet. Die Grösse der Drehbewegungen ist so gewählt, dass bei aufeinanderfolgenden Umdrehungen unterschiedliche Stössel 54 stehen. Zum periodischen Festhalten der unteren Schweisselektrode 20 ist eine hydraulisch betätigbare Klemmvorrichtung 60 vorgesehen; die obere Schweisselektrode 22 wird von dem Stössel 54 periodisch festgehalten.

Für die dargestellte Vorrichtung gilt, dass nach jeder Aufwärtsbewegung des oberen Elektrodenträgers 16 ein Dosenteil 10 und eine Lasche 12 zwischen die beiden Schweisselektroden 20 und 22 eingelegt wird; zum Einlegen und genauen Positionieren der Lasche 12 kann gemäss Fig. 1 ein magnetischer Greifer 62 vorgesehen sein, der taktweise um eine senkrechte Achse drehbar ist.

Für die auf- und niedergehenden Bewegungen des oberen Elektrodenträgers 16 (oder wahlweise des unteren Elektrodenträgers 14) kann, wie in Fig. 1 angedeutet, anstelle eines hydraulischen Antriebes ein mechanischer, beispielsweise nockengesteuerter Antrieb vorgesehen sein.

## Patentansprüche

1. Vorrichtung zum Punktschweissen beschichteter Blechteile, insbesondere zum Anschweissen von Laschen (12) an aufreissbaren Dosenteilen (10) aus Weissblech, mit einem Paar Schweisselektroden (20, 22), die taktweise zueinander hin und voneinander weg bewegbar sind, und von denen mindestens eine Schweisselektrode (20, 22) zusätzlich taktweise derart drehbar ist, dass aufeinanderfolgende Punktschweissungen von unterschiedlichen Elektrodenabschnitten ausgeführt werden, dadurch gekennzeichnet, dass mindestens eine der Schweiss-elektroden (20, 22), die eine im wesentlichen ebene, ringförmige Stirnfläche (46 bzw. 48) zum Schweissen hat, schrittweise um eine Achse drehbar ist, längs derer die beiden Schweisselektroden (20, 22) zueinander hin- und voneinander wegbewegbar sind.

2. Vorrichtung nach Anspruch 1, dadurch gekennzeichnet, dass die bzw. jede drehbare Schweisselektrode (20, 22) taktweise um einen Winkel drehbar ist, durch den eine volle Umdrehung (360°) nicht ohne Rest teilbar ist.

**Revendications**

1. Dispositif de soudage par points d'éléments en tôle plaquée, notamment pour souder des languettes (12) sur des parties de boîte (10) arrachables en fer-blanc, comportant une paire d'électrodes de soudage (20, 22) qui s'approchent et s'éloignent l'une de l'autre à un certain rythme, et dont au moins une électrode de soudage (20, 22) peut en plus tourner à un certain rythme de manière que des soudures par points successives soient exécutées par des sections d'électrode différentes, caractérisé en ce qu'au moins l'une des électrodes de soudage (20, 22) qui présente une face frontale (46, 48) de soudage annulaire, à peu près plane, tourne pas - à - pas autour d'un axe le long duquel s'approchent et s'éloignent l'une de l'autre les deux électrodes de soudage (20, 22).

2. Dispositif selon la revendication 1, caractérisé en ce que la ou chaque électrode de soudage (20, 22) rotative tourne pas-à-pas d'un angle par lequel une rotation complète (360°) n'est pas divisible sans reste.

**Claims**

1. A device for the spot welding of coated sheet-metal parts, particularly for welding tongues (12) on to tear-open can members (10) of tin plate, having a pair of welding electrodes (20, 22) which are movable cyclically towards and away from one another and of which at least one welding electrode (20, 22) is additionally rotatable cyclically in such a manner that successive spot welds are carried out by different portions of the electrode, characterised in that at least one of the welding electrodes (20, 22), which has a substantially plane, annular end face (46 or 48) for the welding, is rotatable step-by-step about an axis along which the two welding electrodes (20, 22) are movable towards and away from one another.

2. A device according to Claim 1, characterised in that the or each rotatable welding electrode (20, 22) is rotatable cyclically through an angle by which a complete revolution (360°) cannot be divided without a remainder.

Fig.1

Fig.2